# EUROPÄISCHE PATENTSCHRIFT

(11) **EP 0 544 638 B1**
(45) Veröffentlichungstag und Bekanntmachung des Hinweises auf die Patenterteilung: **27.12.1995**
(21) Anmeldenummer: 92890217.0
(22) Anmeldetag: 14.10.1992
(51) Int. Cl.: B60C 11/12, B60C 11/11

(54) **Fahrzeugreifen**
Vehicle tyre
Bandage pneumatique pour véhicule

(30) Priorität: 28.11.1991 AT 2371/91
(43) Veröffentlichungstag der Anmeldung: 02.06.1993
(73) Patentinhaber: Semperit Reifen Aktiengesellschaft, A-2514 Traiskirchen (AT)
(72) Erfinder: Wohlfahrt, Raimund, A-2551 Enzesfeld (AT)
(74) Vertreter: Vinazzer, Edith, Dipl.-Ing.

(56) Entgegenhaltungen:
- EP-A- 0 456 949
- EP-A- 0 457 233
- GB-A- 449 136
- PATENT ABSTRACTS OF JAPAN vol. 013, no. 140 (M-810)6. April 1989 & JP-A-63 305 009 (THE YOKOHAMA RUBBER CO. LTD.) 13. Dezember 1988

## Beschreibung

Die vorliegende Erfindung betrifft einen insbesondere für den Wintereinsatz geeigneten Fahrzeugluftreifen mit einem Laufflächenprofil, welches durch Nuten in eine Vielzahl von Profilelemente, wie Blöcke oder Umfangsrippen, gegliedert ist, die jeweils mit einer Vielzahl von Lamellenfeineinschnitten versehen sind.

Fahrzeugluftreifen mit derartigen Laufflächenprofilen sind in verschiedenen Ausführungsvarianten bekannt und es wird beispielsweise auf das österreichische Patent Nr. 390916 verwiesen, wo ein Laufflächenprofil dargestellt und beschrieben ist, welches durch Quernuten in Profilelemente gegliedert ist, die mit einer Velzahl von Feineinschnitten versehen sind, die etwa parallel zu den der Profilquerrichtung zugeordneten Profilelementkanten verlaufen. Mit diesem bekannten Laufflächenprofil ausgestattete Reifen haben sich im Wintereinsatz, insbesondere auf nasser, eisiger oder schneeiger Fahrbahn sehr gut bewährt

Die Erfindung hat sich nun die Aufgabe gestellt, einen Fahrzeugreifen der eingangs genannten Art hinsichtlich seines Verhaltens bei seitlich wirkenden Kräften, etwa beim Kurvenfahren, auf eisigem oder schneeigem Untergrund zu verbessern und auch hinsichtlich des Fahrverhaltens auf nasser und trockener Fahrbahn weiter zu entwickeln.

Gelöst wird die gestellte Aufgabe erfindungsgemäß dadurch, daß die Feineinschnitte der in der Profilmitte angeordneten Profilelemente unter einem Winkel von 90° +/- 10° relativ zur Äquatorlinie verlaufen, daß die Feineinschnitte in den schulterseitig angeordneten Profilelementen unter einem Winkel von 90° +/- 20° relativ zur Äquatorlinie verlaufen, wobei diese Feineinschnitte unter einem kleineren Winkel relativ zur Äquatorlinie verlaufen, als die Feineinschnitte in den in der Profilmitte angeordneten Profilelementen, und daß die Feineinschnitte in den dazwischenliegenden Profilelementen unter einem Winkel von 130° bis 150°, insbesondere von ca. 135°, relativ zur Äquatorlinie verlaufen.

Ein Reifen mit einer erfindungsgemäßen Profilgestaltung stellt einen sehr guten Kompromiß hinsichtlich der an einen für den Wintereinsatz bestimmten Reifen gestellten Anforderungen dar. Durch die in der Laufflächenmitte in Querrichtung orientierten Feineinschnitte ist eine gute Kraftübertragung beim Bremsen und beim Beschleunigen auf winterlichen Fahrbahnen gewährleistet. Die schulterseitig ebenfalls der Querrichtung zugeordneten Feineinschnitte wirken sich positiv auf das Fahrverhalten auf nasser und trockener Fahrbahn aus. Die in den dazwischenliegenden Profilbereichen unter einem relativ steilen Winkel zur Äquatorlinie angeordneten Feineinschnitte gewährleisten sehr gute Seitenführungseigenschaften, so daß beim Kurvenfahren unter winterlichen Fahrbedingungen die Griffeigenschaften, insbesondere auch beim Bremsen und beim Beschleunigen, gegenüber bekannten Ausführungsformen wesentlich verbessert sind.

Besonders vorteilhafte Ausführungsvarianten und Ausgestaltungen der Erfindung sind in den Unteransprüchen enthalten.

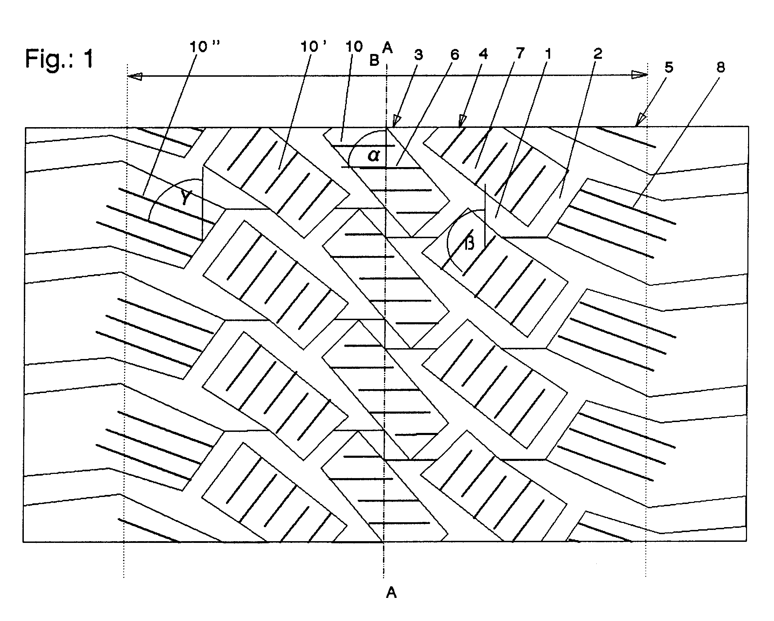

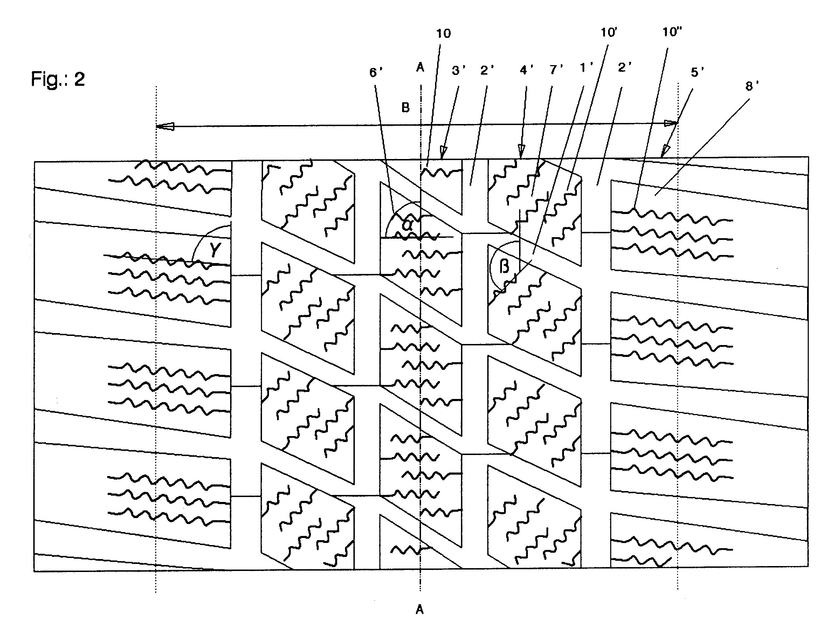

Weitere Merkmale, Vorteile und Einzelheiten der Erfindung werden nun anhand der Zeichnung, die zwei Ausführungsbeispiele darstellt, näher beschrieben. Dabei zeigen die Figuren 1 und 2 verschiedene Profilvarianten, wobei jeweils eine Draufsicht auf eine Teilabwicklung des Laufflächenprofiles schematisch dargestellt ist.

Die Zeichnungsfiguren zeigen Laufflächenprofile, die insbesondere für PKW-Winterreifen geeignet sind. In der nun folgenden Beschreibung wird dabei jeweils das Profil über die Breite B betrachtet, die der größten axialen Breite in der Bodenaufstandsfläche unter Nenndruck und Nennlast entspricht. Das in Fig. 1 gezeigte Laufflächenprofil ist durch, über die Laufflächenbreite B betrachtet, schwach S-förmig gekrümmte Quernuten 1 und durch zwischen benachbarten Quernuten 1 ausgebildeten Verbindungsnuten 2, die mit der Äquatorlinie A-A einen Winkel von ca. 30° bis 50° einschließen, in eine Anzahl von in Umfangsrichtung verlaufenden Blockreihen 3, 4, 5 gegliedert. Eine Blockreihe 3 verläuft dabei entlang des Reifenäquators A-A, schulterseitig ist je eine Blockreihe 5 angeordnet. Zwischen der zentralen Blockreihe 3 und den beiden schulterseitig gelegenen Blockreihen 5 ist jeweils eine mittlere Blockreihe 4 vorgesehen. Die Quernuten 1 verlaufen über einen Großteil ihrer Länge unter Winkeln von 40° bis 65° relativ zur Äquatorlinie A-A. Die Einzelblöcke 6, 7 der zentralen Blockreihe 3 und der beiden mittleren Blockreihen 4 weisen einen im wesentlichen rechteckigen Grundriß auf und sind somit gegenüber der Äquatorlinie A-A ausgeprägt schräg gestellt. Sämtliche Blöcke 6, 7, 8 sind jeweils mit einer Anzahl von Feineinschnitten 10, 10', 10'' versehen, die im vorliegenden Ausführungsbeispiel, in Draufsicht betrachtet, geradlinig gestaltet sind. Diese Feineinschnitte könnten auch wellenförmig gestaltet werden, wobei dann für die folgende Betrachtungsweise der Verlauf der Mittellängsachsen heranzuziehen wäre. Die in der zentralen Blockreihe 3 angeordneten Feineinschnitte 10 verlaufen bevorzugt in Querrichtung und somit unter einem Winkel α von 90° zur Äquatorlinie A-A. Dabei kann der Winkel α geringfügig, und zwar um etwa +/- 10° von der exakten Querrichtung abweichen. Die in den Blöcken 7 der mittleren Blockreihen 4 vorgesehenen Feineinschnitte 10' verlaufen relativ zur Äquatorlinie A-A unter einem Winkel β von maximal 50°, insbesondere unter einem Winkel β zwischen 30° und 45°. Die in den Blöcken 7 der mittleren Blockreihen 4 verlaufenden Feineinschnitte 10' verlaufen dabei zumindest im wesentlichen parallel zu den die Verbindungsnuten 2 begrenzenden Blockkanten und schließen mit jenen Blockkanten, die die Quernuten 1 begrenzen, etwa einen rechten Winkel ein.

Die Feineinschnitte 10' in den Blöcken 6 der zentralen Blockreihe 3 schließen mit jenen Blockkanten, die die Quernuten 1 begrenzen einen Winkel von 35° bis 50°, insbesondere von ca. 45°, ein. Die in den Blöcken 8 der schulterseitig verlaufenden Blockreihen 5 angeordneten Feineinschnitte 10'' verlaufen unter einem Winkel γ, der zwischen 70° und 90° beträgt, zur Äquatorlinie A-A. Die Feineinschnitte 10 und 10' in der zentralen und den beiden mittleren Blockreihen 4 durchqueren dabei die Blöcke nahezu zur Gänze bzw. zumindest zu zwei Drittel in ihrer Erstreckungsrichtung. Die Anordnung ist dabei so getroffen, daß die Feineinschnitte 10, 10' pro Block abwechselnd in je eine der benachbarten Quernuten 1 einmünden. In den schulterseitig gelegenen Blockreihen 5 können sämtliche Feineinschnitte 10'' pro Block in die benachbarte Verbindungsnut 2 einmünden. Zur Erhöhung der Griffeigenschaften beim Bremsen und Beschleunigen auf schneeigem oder eisigem Untergrund ist es dabei von Vorteil, wenn die Feineinschnitte 10 in der zentralen Blockreihe 3 voneinander geringer beabstandet sind, als die Feineinschnitte 10', 10'' in den beiden weiteren Blockreihen 4, 5. Bei wellenförmig gestalteten Feineinschnitten wirkt es sich in diesem Zusammenhang auch günstig aus, wenn die Feineinschnitte in der zentralen Blockreihe 3 eine Wellenform mit einer kürzeren Wellenlänge aufweisen, als jene in den schulterseitig gelegenen Blockreihen 5.

Bei dem in Fig. 2 dargestellten Ausführungsbeispiel weist das Laufflächenprofil vier in Umfangsrichtung gerade bzw. im wesentlichen gerade verlaufende breite Umfangsnuten 2' auf, wobei durch Quernuten 1' wiederum eine Gliederung in fünf Blockreihen erfolgt, von welchen die zentrale Blockreihe 3' und die beiden mittleren Blockreihen 4' aus Einzelblöcken mit einem im wesentlichen parallelogrammförmigen bzw. rhombenförmigen Grundriß bestehen. Auch bei dieser Ausführungsvariante sind in den Einzelblöcken 6' der zentralen Blockreihe 3' Feineinschnitte 10 vorgesehen, die unter einem Winkel α von 90° und somit in Reifenquerrichtung bzw. Profilquerrichtung verlaufen, in den anschließenden mittleren Blockreihen 4' sind die Feineinschnitte 10' in den Einzelblöcken 7' unter einem Winkel β von maximal 45° gegenüber der Äquatorlinie A-A geneigt, die Blöcke 8' der schulterseitig verlaufenden Blockreihen 5' haben wiederum Feineinschnitte 10'', die im wesentlichen in Querrichtung orientiert sind und unter einem Winkel γ von 70° bis 90° zur Äquatorlinie A-A verlaufen.

Die Erfindung ist auf die dargestellten Ausführungsbeispiele nicht eingeschränkt. So wird insbesondere darauf verwiesen, daß anstelle der wellen- bzw. sinusförmig gestalteten Feineinschnitte auch solche gewählt werden können, die in Draufsicht geradlinig oder im wesentlichen geradlinig verlaufen. Ebenso ist eine Kombination eines geradlinigen mit einem wellenförmigen Verlauf denkbar. Die Feineinschnitte können ferner die Blöcke auch zur Gänze durchqueren. Es ist auch möglich, daß in Abhängigkeit von der gewählten Grundrißgestalt der Einzelblöcke die Feineinschnitte, in Draufsicht betrachtet, einen leicht gekrümmten Verlauf aufweisen.

Die Breite der Feineinschnitte beträgt ca. 0,4 bis 1 mm, insbesondere 0,5 mm.

Bei einer gesondert nicht dargestellten Ausführungsform, insbesondere für drehrichtungsgebundene Profile, können die Feineinschnitte in den mittleren Blockreihen, gegebenenfalls auch in den schulterseitigen Blockreihen, bezogen auf die Äquatorlinie A-A, gegensinnig geneigt angeordnet werden.

Es ist grundsätzlich auch möglich, anstelle von Blockreihen Umfangsrippen vorzusehen.

## Patentansprüche

1. Fahrzeugreifen mit einem Laufflächenprofil, welches durch Nuten in eine Vielzahl von Profilelemente, wie Blöcke oder Umfangsrippen, gegliedert ist, die jeweils mit einer Vielzahl von Lamellenfeineinschnitten versehen sind, dadurch gekennzeichnet, daß die Feineinschnitte (10) der in der Profilmitte angeordneten Profilelemente (6, 6') unter einem Winkel (α) von 90° +/- 10° relativ zur Äquatorlinie (A-A) verlaufen, daß die Feineinschnitte (10'') in den schulterseitig angeordneten Profilelementen (8, 8') unter einem Winkel (γ) von 90° +/- 20° relativ zur Äquatorlinie (A-A) verlaufen, wobei diese Feineinschnitte unter einem kleineren Winkel (γ) relativ zur Äquatorlinie (A-A) verlaufen, als die Feineinschnitte (10) in den in der Profilmitte angeordneten Profilelementen (6, 6'), und daß die Feineinschnitte (10') in den dazwischenliegenden Profilelementen (7, 7') unter einem Winkel (β) von 130° bis 150°, insbesondere von ca. 135°, relativ zur Äquatorlinie (A-A) verlaufen.

2. Fahrzeugreifen nach Anspruch 1, dadurch gekennzeichnet, daß die Feineinschnitte (10, 10', 10'') die Profilelemente (6, 6', 7, 7', 8, 8') in an sich bekannter Weise jeweils zumindest zu zwei Drittel in Richtung ihrer Erstreckung durchsetzen.

3. Fahrzeugreifen nach Anspruch 1 oder 2, dadurch gekennzeichnet, daß die Feineinschnitte (10) in den in der Profilmitte angeordneten Profilelementen (6, 6') voneinander geringer beabstandet sind als die Feineinschnitte (10', 10'') in den weiteren Profilelementen (7, 7', 8, 8').

4. Fahrzeugluftreifen nach einem der Ansprüche 1 bis 3, dadurch gekennzeichnet, daß die Feineinschnitte, in Draufsicht betrachtet, wellenförmig gestaltet sind.

5. Fahrzeugluftreifen nach Anspruch 4, dadurch gekennzeichnet, daß die Feineinschnitte (10) in den in der Profilmitte angeordneten Profilelementen (6, 6') eine kürzere Wellenlänge aufweisen als jene, die in den schulterseitig angeordneten Profilelementen (8, 8') verlaufen.

6. Fahrzeugluftreifen nach einem der Ansprüche 1 bis 5, dadurch gekennzeichnet, daß die Profilelemente Blöcke (6, 7, 8) sind, die innerhalb von fünf Blockreihen (3, 4, 5) verlaufen.

7. Fahrzeugluftreifen nach einem der Ansprüche 1 bis 6, dadurch gekennzeichnet, daß die Feineinschnitte (10) in der in der Profilmitte angeordneten zentralen Blockreihe (3) mit jenen Blockkanten, die Quernuten (1) begrenzen, einen Winkel von 35° bis 50°, insbesondere ca. 45°, einschließen.

8. Fahrzeugluftreifen nach einem der Ansprüche 1 bis 6, dadurch gekennzeichnet, daß die Feineinschnitte (10') in den zwischen der zentralen Blockreihe (3) und den schulterseitig angeordneten Blockreihen (5) verlaufenden mittleren Blockreihen (4) mit jenen Blockkanten, die Quernuten (1) begrenzen, einen im wesentlichen rechten Winkel einschließen.

## Claims

1. Vehicle tyre, having a tread surface profile which is divided by grooves into a plurality of profile elements, such as blocks or circumferential ribs, which are each provided with a plurality of fine laminar incisions, characterised in that the fine incisions (10) of the profile elements (6, 6'), which are disposed in the profile centre, extend at an angle (α) of 90° +/- 10° relative to the centre line (A-A), in that the fine incisions (10'') in the profile elements (8, 8'), which are disposed at the shoulder end, extend at an angle (γ) of 90° +/- 20° relative to the centre line (A-A), these fine incisions extending at a smaller angle (γ) relative to the centre line (A-A) than the fine incisions (10) in the profile elements (6, 6'), which are disposed in the profile centre, and in that the fine incisions (10') in the profile elements (7, 7') lying therebetween extend at an angle (β) of between 130° and 150°, more especially approx. 135°, relative to the centre line (A-A).

2. Vehicle tyre according to claim 1, characterised in that the fine incisions (10, 10', 10'') traverse the profile elements (6, 6', 7, 7', 8, 8') in a manner known per se, in each case up to at least two-thirds in the direction of their extension.

3. Vehicle tyre according to claim 1 or 2, characterised in that the fine incisions (10) in the profile elements (6, 6'), which are disposed in the profile centre, have a smaller spacing from one another than the fine incisions (10', 10'') in the further profile elements (7, 7', 8, 8').

4. Pneumatic vehicle tyre according to one of claims 1 to 3, characterised in that the fine incisions have an undulatory configuration when viewed from above.

5. Pneumatic vehicle tyre according to claim 4, characterised in that the fine incisions (10) in the profile elements (6, 6'), which are disposed in the profile centre, have a shorter undulation length than those fine incisions which extend in the profile elements (8, 8') disposed at the shoulder end.

6. Pneumatic vehicle tyre according to one of claims 1 to 5, characterised in that the profile elements are blocks (6, 7, 8), which extend internally of five rows of blocks (3, 4, 5).

7. Pneumatic vehicle tyre according to one of claims 1 to 6, characterised in that the fine incisions (10) in the central row of blocks (3), which is disposed in the profile centre, form an angle of between 35° and 50°, more especially approx. 45°, with those block edges which define transverse grooves (1).

8. Pneumatic vehicle tyre according to one of claims 1 to 6, characterised in that the fine incisions (10') in the middle rows of blocks (4), which extend between the central row of blocks (3) and the rows of blocks (5) disposed at the shoulder end, substantially form a right angle with those block edges which define transverse grooves (1).

## Revendications

1. Bandage pneumatique pour véhicule comportant un profil de surface de roulement scindé, par des gorges, en un grand nombre d'éléments de profilage tels que des blocs ou des nervures périphériques qui sont respectivement pourvu(e)s d'un grand nombre de minces entailles de lamellisation, caractérisé par le fait que les entailles minces (10) des éléments de profilage (6, 6') situés au centre du profil s'étendent selon un angle (α) de 90° +/- 10° par rapport à la ligne équatoriale (A-A) ; par le fait que les entailles minces (10'') ménagées dans les éléments de profilage (8, 8') situés côté épaulement s'étendent selon un angle (γ) de 90° +/- 20° par rapport à la ligne équatoriale (A-A), ces entailles minces s'étendant, par rapport à la ligne équatoriale (A-A), selon un plus petit angle (γ) que les entailles minces (10) ménagées dans les éléments de profilage (6, 6') situés au centre du profil ; et par le fait que les entailles minces (10') ménagées dans les éléments de profilage intercalaires (7, 7') s'étendent selon un angle (β) de 130° à 150°, notamment d'environ 135° par rapport à la ligne équatoriale (A-A).

2. Bandage pneumatique pour véhicule selon la revendication 1, caractérisé par le fait que les entailles minces (10, 10', 10'') traversent respectivement les éléments de profilage (6, 6', 7, 7', 8, 8'), d'une manière connue en soi, à raison d'au moins deux tiers dans la direction de leur étendue.

3. Bandage pneumatique pour véhicule selon la revendication 1 ou 2, caractérisé par le fait que les entailles minces (10) ménagées dans les éléments de profilage (6, 6') situés au centre du profil sont moins espacées, les unes des autres, que les entailles minces (10', 10'') ménagées dans les autres éléments de profilage (7, 7', 8, 8').

4. Bandage pneumatique pour véhicule selon l'une des revendications 1 à 3, caractérisé par le fait que les entailles minces sont de configuration ondulée observées en plan.

5. Bandage pneumatique pour véhicule selon la revendication 4, caractérisé par le fait que les entailles minces (10), ménagées dans les éléments de profilage (6, 6') situés au centre du profil, présentent une plus petite longueur d'ondulation que celles qui s'étendent dans les éléments de profilage (8, 8') situés côté épaulement.

6. Bandage pneumatique pour véhicule selon l'une des revendications 1 à 5, caractérisé par le fait que les éléments de profilage sont des blocs (6, 7, 8) s'étendant à l'intérieur de cinq rangées (3, 4, 5) de blocs.

7. Bandage pneumatique pour véhicule selon l'une des revendications 1 à 6, caractérisé par le fait que les entailles minces (10) ménagées dans la rangée centrale (3) de blocs située au centre du profil décrivent, avec les bords des blocs délimitant des gorges transversales (1), un angle de 35° à 50°, notamment d'environ 45°.

8. Bandage pneumatique pour véhicule selon l'une des revendications 1 à 6, caractérisé par le fait que les entailles minces (10') ménagées dans les rangées médianes (4) de blocs, s'étendant entre la rangée centrale (3) de blocs et les rangées (5) de blocs situées côté épaulement, décrivent un angle sensiblement droit avec les bords des blocs qui délimitent des gorges transversales (1).
